# EUROPÄISCHE PATENTSCHRIFT

(11) **EP 2 790 866 B1**
(45) Veröffentlichungstag und Bekanntmachung des Hinweises auf die Patenterteilung: **18.04.2018**
(21) Anmeldenummer: 12791694.8
(22) Anmeldetag: 09.11.2012
(51) Int. Cl.: B23K 20/12

(54) **VERFAHREN ZUM FÜGEN ZWEIER IM WESENTLICHEN BLECHARTIGER WERKSTÜCKE MITTELS REIBQUETSCHSCHWEISSEN UNTER VERWENDUNG EINES ZUSATZWERKSTOFFS**
METHOD OF JOINING TWO ESSENTIALLY METAL SHEET-TYPE WORKPIECES BY MEANS OF FRICTION SQUEEZE WELDING USING A FILLER MATERIAL
PROCÉDÉ POUR ASSEMBLER DEUX PIÈCES SENSIBLEMENT SOUS FORME DE TÔLE PAR SOUDAGE PAR FRICTION-ÉCRASEMENT AU MOYEN D'UN MATÉRIAU D'APPORT

(30) Priorität: 16.12.2011 DE 102011121199; 31.01.2012 DE 102012001778
(43) Veröffentlichungstag der Anmeldung: 22.10.2014
(73) Patentinhaber: Hochschule Für Angewandte Wissenschaften - Fachhochschule Kempten, 87435 Kempten (DE)
(72) Erfinder: SCHINDELE, Paul, 87439 Kempten (DE)
(74) Vertreter: Hoefer & Partner Patentanwälte mbB
(86) Internationale Anmeldenummer: PCT/EP2012/004669
(87) Internationale Veröffentlichungsnummer: WO 2013/087137

(56) Entgegenhaltungen:
- JP-A- 2000 317 652
- JP-A- 2004 174 575
- JP-A- 2007 319 877
- US-A1- 2004 134 971
- US-A1- 2006 169 748

## Beschreibung

Die Erfindung bezieht sich auf ein Verfahren zum Fügen zweier im Wesentlichen blechartiger Werkstücke mittels Reibquetschschweißen, siehe den Oberbegriff des Anspruchs 1 (siehe z.B. US2006/169748 A1). Zum stoffschlüssigen Fügen von Blechen oder ähnlichen Werkstücken können sowohl Schmelz- als auch Pressschweißverfahren verwendet werden.

Bei den Schmelzschweißverfahren entsteht ein gemeinsames Schmelzbad der beiden Verbindungspartner mit optionaler Zugabe eines Zusatzwerkstoffes meist in Form eines Schweißdrahtes. Dabei entsteht anschließend ein Schmelz-Erstarrungsgefüge. Die Temperaturbelastung der Bauteile liegt im Fügebereich in Höhe der Schmelztemperaturen der zu fügenden Werkstoffe.

Bei Pressschweißverfahren wird neben der Erwärmung durch verschiedene Wärmequellen, wie beispielsweise elektrische Widerstanderwärmung, das Material auf Erweichungstemperatur gebracht und durch eine Anpresskraft zusammengepresst, wodurch eine Schweißverbindung entsteht.

Bei dem bekannten Reibrührschweißen werden die zu verbindenden Materialien durch einen Rührvorgang erwärmt und im Schweißbereich miteinander verrührt. Dieses Verfahren ist jedoch auf bestimmte, gut verformbare Materialien und Mindestmaterialstärken begrenzt.

Beim Kaltpressschweißen gibt es ebenfalls eine Begrenzung auf weichere Werkstoffe und bestimmte Materialstärken.

Das Fügen dünnwandiger Werkstücke, insbesondere das Fügen von Blechen, erfordert besondere Maßnahmen, da das durch die Werkstücke im Fügebereich zur Verfügung gestellte Materialvolumen sehr gering ist und da Beschädigungen der angrenzenden Bereiche der Bleche vermieden werden müssen. Es wurde deshalb bei den Reibschweißverfahren bereits vorgeschlagen, zum Fügen dünnwandiger Metallrohre mit anderen Körpern den Rand des Metallrohrs vor dem Reibschweißen zu verbreitern, um ein Einschneiden zu verhindern. Dies ist in der DE 38 02 300 C1 beschrieben. Ein weiteres Verfahren, bei welchem die Kontaktzone mit einem Reibwerkzeug möglichst groß gestaltet wird, zeigt die EP 1 236 533 A1.

Aus JP 2000 317652 A ist ein Rührreibschweißverfahren bekannt, bei welchem plattenartige Werkstücke miteinander gefügt werden. Zusätzlich wird ein plattenartiges Zusatzmaterial-Element eingelegt. Mittels eines Rührreibschweißwerkzeuges, welches sowohl in das Zusatzmaterial-Element als auch in die Werkstücke eindringt und das Material sowohl des Zusatzmaterial-Elements als auch der Werkstücke aufschmilzt, erfolgt ein Fügen der Werkstücke.

Weitere Rührreibschweißverfahren sind aus JP 2007 319077 A, US 2006/169748 A1, JP 2004/174575 A und US 2004/134971 A1 vorbekannt. Dabei erfolgt jeweils ein Aufschmelzen des Materials mittels eines in das Material eintauchenden Rührreibschweißelements.

Der Erfindung liegt die Aufgabe zugrunde, ein Verfahren zum Fügen zweier im Wesentlichen blechartiger Werkstücke zu schaffen, welches bei einfachem Aufbau und einfacher, kostengünstiger Anwendbarkeit einen geringen maschinellen Aufwand erfordert und ein sicheres Fügen der blechartigen Werkstücke ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Die Erfindung beschreibt somit ein Verfahren zum Fügen zweier im Wesentlichen blechartiger Werkstücke gemäß Anspruch 1, bei welchem die zu fügenden Randbereiche der Werkstücke mit einem Abstand zueinander positioniert werden, bei welchem in einen Bereich zwischen den Randbereichen vor oder während des Fügevorgangs zumindest ein drahtförmiger Zusatzwerkstoff eingebracht wird und bei welchem die Randbereiche und der Zusatzwerkstoff nachfolgend mittels zumindest eines ersten, eine Relativbewegung zu den Randbereichen und dem Zusatzwerkstoff ausführenden Reibelements auf eine vorgegebene Fügetemperatur erwärmt und mit einem Anpressdruck beaufschlagt und unter Verformung gefügt werden.

Bei dem erfindungsgemäßen Reibquetschschweißverfahren zum Fügen zweier im Wesentlichen blechartiger Werkstücke wird somit der zum Fügen benötigte Zusatzwerkstoff in Form eines Drahtes oder Bandes zugeführt. Dieser Draht kann rund oder rechteckig oder in beliebiger anderer Form hinsichtlich seines Querschnitts ausgebildet sein. Somit ist es zum einen möglich, Randspalten zu überbrücken, welche sich beim Zuschnitt der Werkstücke ergeben können. Es ist auch möglich, Unregelmäßigkeiten oder Ähnliches hierdurch auszugleichen. Insgesamt wird die Möglichkeit geschaffen, mittels eines ausreichenden Volumens an Zusatzwerkstoff eine hochwertige Fügeverbindung (Schweißnaht) zu realisieren.

Bei dem erfindungsgemäßen Verfahren können die Werkstücke und der Zusatzwerkstoff jeweils aus dem gleichen Material bestehen, es ist jedoch auch möglich, unterschiedliche Materialien zu verwenden. Somit ist es auch möglich, aus unterschiedlichen Materialien hergestellte Werkstücke zu fügen.

Ein wesentlicher Aspekt der vorliegenden Erfindung besteht darin, dass der Fügebereich nicht aufgeschmolzen, sondern lediglich plastifiziert wird. Dies ist hinsichtlich der Gefügeeigenschaften besonders vorteilhaft. Weiterhin ist es mittels des erfindungsgemäßen Verfahrens auch möglich, Werkstoffe miteinander zu verschweißen, welche mittels der klassischen Fügeverfahren nicht verbindbar sind.

Beim Verbindungsschweißen von Blechen können die Bleche auch mit einem kleinen Spalt auf Stoß gelegt werden, wobei in den Spalt ein runder oder rechteckiger Draht als Zusatzwerkstoff eingelegt wird. Der Spalt wird bevorzugt so gewählt, dass er durch den anschließend eingeriebenen Draht aufgefüllt wird. Die Drahtdicke wird ebenso der Spaltweite angepasst.

Mit dem Reibelement werden gemäß der Erfindung der Zusatzwerkstoff und die Blechkanten durch eine Rotations- und/oder Oszillationsreibbewegung plastifiziert, so dass sie durch die Anpresskraft des Reibelements eine Pressschweißverbindung eingehen.

Bei dem erfindungsgemäßen Verfahren werden somit die zu fügenden Randbereiche nebeneinander gelegt und somit positioniert. Der Zusatzdraht wird über eine Fördereinrichtung oder von Hand so positioniert, dass er von dem Reibelement nach der Plastifizierung in den Fugenbereich zwischen den Blechen gezogen wird. Nachfolgend werden die Randbereiche und der Zusatzwerkstoff mittels eines Reibelements auf eine vorgegebene Fügetemperatur erwärmt und dabei mit einem Anpressdruck beaufschlagt. Das Reibelement wird in eine Relativbewegung zu den Randbereichen und dem Zusatzwerkstoff versetzt. Durch die Reibungswärme werden die Randbereiche und der Zusatzwerkstoff erwärmt und dabei plastifiziert. Der durch das Reibelement aufgebrachte Anpressdruck, welcher senkrecht zu einer Mittelebene der Werkstücke wirkt und somit auf die Randbereiche und den drahtförmigen Zusatzwerkstoff drückt, führt dabei zu einer Plastifizierung des Materials der Randbereiche und des Zusatzwerkstoffs und damit zu einem Verquetschen der Randbereiche und des Zusatzwerkstoffs. Dadurch entsteht eine Pressschweißverbindung zwischen den Blechen und dem Zusatzwerkstoff.

Das Reibelement wird erfindungsgemäß umfangsseitig als Reibscheibe oder stirnseitig als Reibbolzen auf die Randbereiche aufgedrückt, es befindet sich im Gegensatz zum Stand der Technik aber gemäß der Erfindung nicht zwischen den Blechen wie beim Rührreibschweißen.

In einer besonders günstigen Ausgestaltung der Erfindung ist vorgesehen, dass die Relativbewegung des Reibelements zu den Randbereichen und dem Zusatzwerkstoff durch eine Rotation und/oder Drehung und/oder Schwingung des Reibelements erfolgt. Diese Relativbewegung erzeugt die für das Fügen erforderliche Reibwärme. Zur Erzeugung einer längeren Schweißnaht erfolgt eine Vorschubbewegung längs der Randbereiche und unter Zufuhr von Zusatzdraht.

Die Erfindung eignet sich somit sowohl zum Fügen von längeren Randbereichen unter Ausbildung einer längeren Fügenaht als auch zum punktuellen oder räumlich eingegrenzten Verbinden der Werkstücke. Somit ist es auch möglich, durch das erfindungsgemäße Reibschweißverfahren Punktschweißverbindungen zu erzeugen. Dabei sind die zu fügenden Randbereiche entsprechend kurz, sei es in linearer Richtung oder in Form runder oder teilkreisförmiger Bereiche.

In Abhängigkeit von den Fügeparametern, insbesondere in Abhängigkeit von der Geometrie und dem Material der Werkstücke, kann es in Weiterbildung des erfindungsgemäßen Verfahrens günstig sein, die Randbereiche und/oder den Zusatzwerkstoff entweder mittels einer externen Wärmequelle zusätzlich zu erwärmen oder mittels eines zusätzlichen Reibelements, welches bei einer Längsbewegung des ersten, oben erwähnten Reibelements vor diesem bewegt wird, zu erwärmen. Bei einer Erwärmung mittels einer externen Wärmequelle können eine Widerstandserwärmung, eine induktive Erwärmung, eine Erwärmung durch eine Flamme (Gasflamme), ein Heißgas, Laser, Lichtbogen, Elektronenstrahl, Plasmastrahl oder durch Schmorkontakte, ähnlich dem Abbrennstumpfschweißen verwendet werden.

Die Verwendung von zusätzlichen Wärmequellen ist vor allem dann günstig, wenn das Zusatzmaterial und die Werkstücke sehr unterschiedliche Erweichungstemperaturen, Wärmeleitfähigkeiten oder Wärmekapazitäten haben. Die zusätzliche Erwärmung erlaubt es dann, jedem Werkstoff die Wärmemenge zuzuführen, die für dessen Plastifizierung und damit für eine erfolgreiche Schweißung notwendig ist. So hat ein dickes Kupferwerkstück einen hohen Wärmeabfluss und benötigt zusätzliche Wärme, während ein dünner aufzuschweißender Kupferdraht sehr schnell auf Erweichungstemperatur gebracht ist. Beim Anschweißen eines Wolframdrahtes an ein Kupferwerkstück ist es z.B. vorteilhaft, eine Vorwärmung auf Erweichungstemperatur des hochschmelzenden Wolframdrahtes mit einem Lichtbogen, Plasmastrahl, Laser- oder Elektronenstrahl vorzunehmen. Dabei ist es sinnvoll, ein Schutzgas bei der Vorwärmung einzusetzen, um eine Oxidation zu vermeiden.

Vorlaufende Reibelemente in Form von rotierenden Scheiben oder Rollen können sowohl für die Vorwärmung der Werkstücke und/oder des Zusatzmaterials als auch für die Entfernung von Oxidschichten eingesetzt werden.

Um eine glatte, nicht erhabene Fügenaht zu erzeugen, welche im Wesentlichen die gleiche Dicke aufweist, wie die Werkstücke, kann es günstig sein, die gefügten Randbereiche im erwärmten Zustand mittels eines Glättungselements zu glätten. Das Glättungselement kann ebenfalls eine Relativbewegung zu den Randbereichen ausführen, ähnlich einer Walze oder eines rotierenden, längs der Längsnaht zu bewegenden Stiftes.

In bevorzugter Ausgestaltung der Erfindung wird als erstes Reibelement und/oder als zusätzliches Reibelement und/oder als Glättungselement entweder ein stabförmiges oder ein rollenförmiges oder ein walzenförmiges Element verwendet. Bei Verwendung eines stabförmigen Elements, dessen Drehachse senkrecht zur Mittelebene der Werkstücke angeordnet ist, ist es günstig, wenn die Stirnfläche des stabförmigen Elements angefast oder mit einem Radius versehen ist.

Erfindungsgemäß kann die Relativbewegung auch durch eine oszillierende Bewegung des ersten Reibelements erzeugt werden.

Zum Fügen sehr dünnwandiger blechartiger Werkstücke oder zum Fügen von Randbereichen, welche in ihrer Geometrie ungenau oder unpräzise sind, ist es somit günstig, dass vor oder während des Fügevorgangs zumindest ein Zusatzwerkstoff zwischen die Randbereiche eingebracht wird, beispielsweise in Form eines Drahtes.

Um dicke Werkstücke zu bearbeiten, kann es günstig sein, zusätzlich zu dem ersten Reibelement rückseitig an dem Werkstück ein zweites Reibelement vorzusehen, welches nicht nur eine Stützfunktion ausübt sondern zusätzlich eine Reibfunktion.

Erfindungsgemäß hat es sich insbesondere als besonders günstig erwiesen, wenn das Reibelement walzenförmig oder radförmig ausgebildet ist, da hierdurch eine verstärkte Relativbewegung zur Plastifizierung des Nahtbereiches vermittelt werden kann.

Durch das Auftragen von mehreren Zusatzwerkstoffen, beispielsweise in Form von Drähten oder Bändern in übereinanderliegenden Quetschverbindungen können Mehrlagenschweißungen ausgeführt werden.

Das stabförmige Reibelement ist bevorzugt an seiner Stirnfläche angefast oder mit einem Radius versehen, wodurch das umzuformende Material leichter erfasst wird.

Das scheibenförmige Reibelement wird bevorzugt im Gleichlauf drehend in Vorschubrichtung bewegt, kann jedoch auch gegenläufig drehen.

Die Erwärmung kann über die Relativgeschwindigkeit des Reibelements gegenüber den Werkstücken und dem Zusatzwerkstoff beeinflusst werden.

Für eine Erhöhung der Schweißgeschwindigkeit als auch für das Schweißen dickerer Materialien kann es vorteilhaft sein, wenn das Material vor der Schweißstelle zusätzlich durch weitere externe Wärmequellen vorgewärmt wird. Dafür kommen folgende Wärmequellen in Betracht: ein zusätzlich eingesetztes vorlaufendes Reibelement und/oder Widerstandserwärmung, induktive Erwärmung, Gasflamme, Heißgas, Laser, Lichtbogen, Elektronenstrahl, Plasmastrahl, Schmorkontakte wie beim Abbrennstumpfschweißen etc.

Es kann vorteilhaft sein, wenn die Naht durch ein zweites Reibelement oder einen Walzvorgang bevorzugt im noch warmen Zustand anschließend geglättet wird. Dies erfolgt bei Einsatz eines stabförmigen zweiten Reibelements mit einer gegenläufigen Drehrichtung zum ersten Reibelement.

Bei einem zweiten scheibenförmigen Reibelement kann der Glättvorgang sowohl im Gleich- als auch im Gegenlauf relativ zur Vorschubrichtung erfolgen.

Das erfindungsgemäße Verfahren weist unter anderem folgenden Vorteile auf:
- Geringere Wärmebeeinflussung als bei Schmelzschweißverfahren.
- Es entsteht eine I-Stoßverbindung mit günstigem Kraftfluss.
- Geringer maschineller Aufwand.
- Bei hoher Drehzahl oder Relativgeschwindigkeit zwischen Reibelement und Werkstück sowie optionaler zusätzlicher Wärmeeinbringung sind hohe Schweißgeschwindigkeiten erreichbar.
- Die Naht kann mit glatter Nahtoberfläche ausgeführt werden, dadurch keine Kerbwirkung der Naht, es muss keine Überlappnaht wie bei anderen Verfahren gefertigt werden, dadurch Materialeinsparung.
- Für sehr viele, auch schwer schweißbare Werkstoffe wie Al oder Cu einsetzbar.
- Feinkörniges Nahtgefüge durch Umformvorgang.
- Kein Schutzgas erforderlich.
- Vorhandene Oxidschichten werden durch den Reibvorgang sicher entfernt.
- Kein Schutz vor Lichtbogen- oder Laserstrahlung notwendig.
- Zwangslagen problemlos schweißbar, da kein flüssiges Schmelzbad.
- Glatte Oberflächen erzeugbar.

Im Folgenden wird die Erfindung anhand von Ausführungsbeispielen in Verbindung mit der Zeichnung beschrieben. Dabei zeigt:
- Fig. 1: eine vereinfachte schematische Seitenansicht eines ersten Ausführungsbeispiels des erfindungsgemäßen Verfahrens,
- Fig. 2: eine abgewandelte Ausgestaltungsform des Verfahrens gemäß Fig.1,
- Fig. 3: eine Seitenansicht der Anordnung von Fig. 2,
- Fig. 4: eine Seitenansicht eines abgewandelten Ausführungsbeispiels mit einer vorauslaufenden Reibscheibe,
- Fig. 5: eine Ansicht, analog Fig. 4, eines abgewandelten Ausführungsbeispiels mit einer nachlaufenden Glättscheibe,
- Fig. 6: ein weiteres Ausführungsbeispiel, analog Fig. 5, unter Verwendung von stabförmigen Reib- und Glättungselementen, und
- Fig. 7: drei Ansichten zur Ausbildung einer Mehrlagennaht.

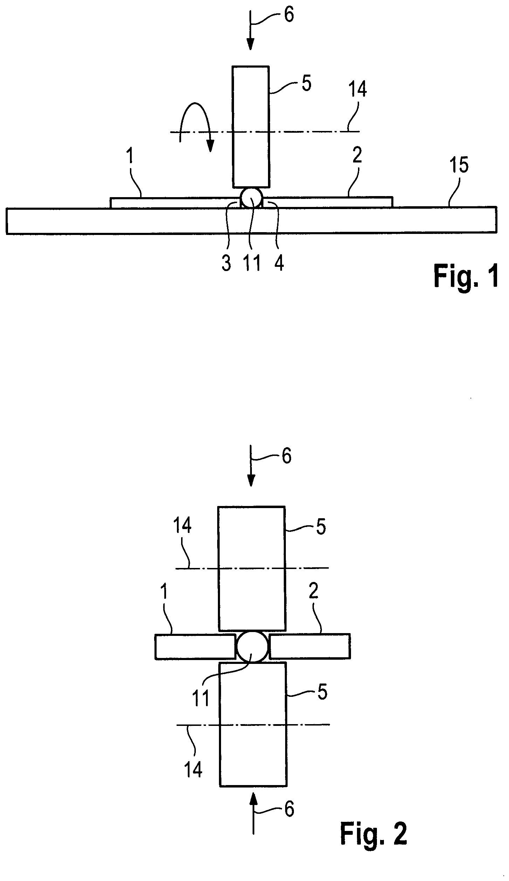

Die Fig. 1 zeigt einen Werkzeugtisch 15, auf welchem zwei plattenförmige Werkstücke 1, 2 angeordnet sind. Diese weisen einen Abstand zueinander auf, in welchen ein drahtförmiges Zusatzmaterial 11 angrenzend an die Randbereiche 3, 4 der Werkstücke 1, 2 eingelegt ist. Der Zusatzwerkstoff (Draht) 11 wird mittels eines ersten scheibenförmigen Reibelements 5 erwärmt und mittels einer Anpresskraft 6 angedrückt. Das Reibelement 5 rotiert um die Drehachse 14.

Nach der Erwärmung und Plastifizierung des Zusatzwerkstoffs 11 werden auch die Randbereiche 3 und 4 erwärmt und plastifiziert, so dass nachfolgend eine Ausbildung einer Fügenaht durch Verpressen der plastifizierten Materialien erfolgt.

Die Reibscheibe 5 kann beispielsweise aus V2A-Material hergestellt sein. Sie läuft ohne Schmierung und somit trocken bei Umdrehungen von beispielsweise 12.000 bis 18.000 U/min. Durch das Reibelement 5 erfolgt kein Abtrag, so dass sich kein Materialverlust ergibt. Vielmehr dient das Reibelement 5 lediglich zur Erwärmung bzw. Plastifizierung und zur Aufbringung der Anpresskraft 6.

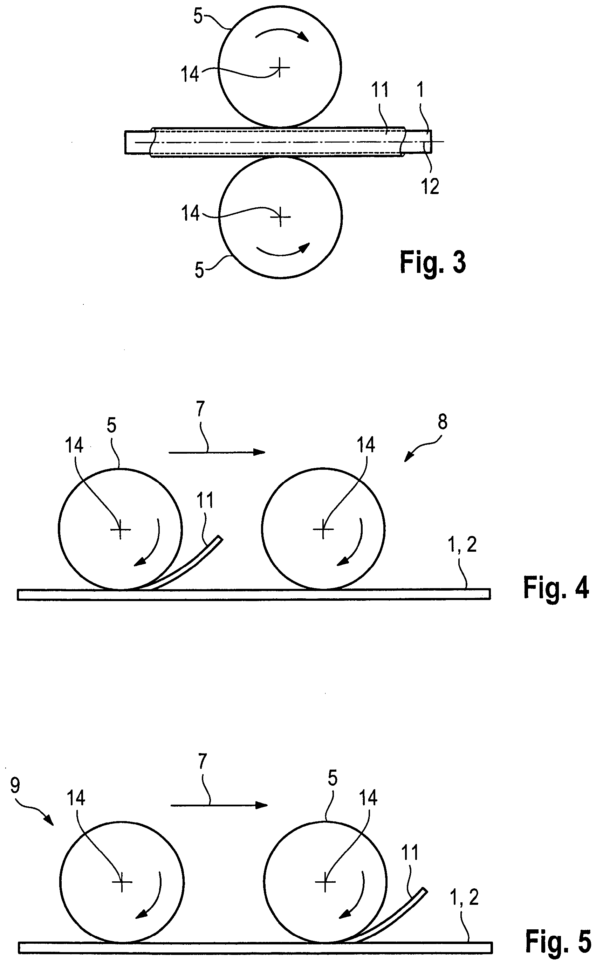

Die Fig. 2 und 3 zeigen ein abgewandeltes Ausführungsbeispiel, welches sich von dem Ausführungsbeispiel der Fig. 1 dadurch unterscheidet, dass anstelle des Tisches 15 ein zweites Reibelement 5 an der Unterseite der Werkstücke 1, 2 angeordnet ist, welches sich ebenfalls um eine Drehachse 14 dreht und somit zur Erwärmung bzw. Plastifizierung und zur Aufbringung einer Anpresskraft 6 ausgebildet ist. Somit erfolgt bei dem Ausführungsbeispiel der Fig. 2 und 3 eine beidseitige Erwärmung bzw. Plastifizierung und Verpressung.

Bei dem in Fig. 4 gezeigten Ausführungsbeispiel ist eine vorauslaufende Reibscheibe (Reibelement) 8 vorgesehen. Diese rotiert ebenfalls um ihre Drehachse 14 und bildet somit eine zusätzliche Wärmequelle, um die Werkstücke 1, 2 zu erwärmen. Nachfolgend wird der drahtförmige Zusatzwerkstoff 11 eingebracht und, wie im Zusammenhang mit Fig. 1 beschrieben, mittels des Reibelements 5 erwärmt und durch Aufbringung der nicht dargestellten Anpresskraft verquetscht, so dass sich eine Fügenaht ergibt. Die Vorschubrichtung ist in Fig. 4 mit dem Pfeil 7 dargestellt.

Die Fig. 5 zeigt eine Ausgestaltungsvariante, bei welcher eine nachfolgende Scheibe 9, welche um eine Drehachse 14 rotiert, als Glättungselement 9 vorgesehen ist, um eine glatte Oberfläche der Schweißnaht auszubilden.

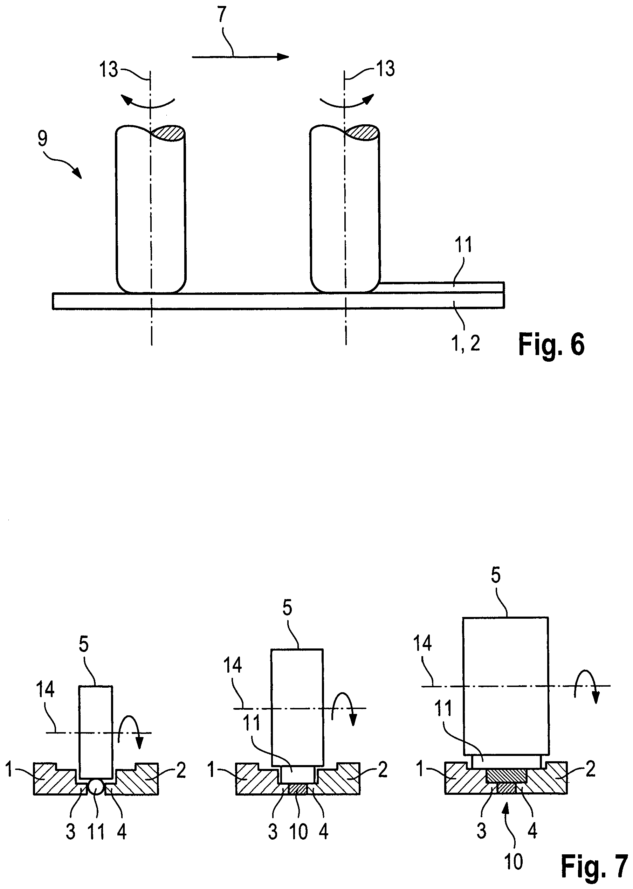

Bei dem in Fig. 6 gezeigten Ausführungsbeispiel ist in Abwandlung zu dem Ausführungsbeispiel der Fig. 5 vorgesehen, stabförmige Reib- und Glättungselemente 9 zu verwenden, welche um ihre Rotationsachsen 13 in Drehung versetzbar sind. Stirnseitig sind die Reib- und Glättungselemente angefast und/oder mit abgerundeten Kanten versehen.

Es versteht sich, dass die in den Fig. 4 bis 6 beschriebenen Varianten mit zusätzlicher Wärmequelle 8 bzw. Glättungselement 9 kombinierbar sind.

Die Fig. 7 zeigt ein weiteres Ausführungsbeispiel, bei welchem eine Mehrlagennaht ausgebildet wird. Hierzu sind die Randbereiche 3, 4 der Werkstücke 1, 2 abgestuft ausgebildet. In der linken Darstellung der Fig. 7 erfolgt zunächst ein Einpressen eines runden drahtförmigen Zusatzwerkstoffs 11 analog der Darstellung in Fig. 1. Die mittlere Darstellung der Fig. 7 zeigt die in dem ersten Schritt (linke Darstellung der Fig. 7) ausgebildete Fügenaht 10, auf welche ein weiteres drahtförmiges Element als Zusatzwerkstoff 11 aufgelegt wird. Dieses weist hierbei einen quaderförmigen Querschnitt auf und wird ebenfalls mit einem Reibelement 5 erwärmt bzw. plastifiziert und mittels der nicht dargestellten Anpresskraft verpresst oder verquetscht. Es versteht sich, dass die Dimensionierung des Zusatzwerkstoffs 11 sowie die Breite des Reibelements 5 entsprechend angepasst werden muss.

Bei der rechten Darstellung der Fig. 7 sind zwei Fügenähte 10 ausgebildet. Es wird ein weiterer rechteckiger drahtförmiger Zusatzwerkstoff 11 aufgelegt und mittels eines Reibelements 5 erwärmt bzw. plastifiziert und verquetscht. Somit ist es möglich, mehrlagige Fügenähte auszubilden.

### Bezugszeichenliste

- 1, 2: Werkstück
- 3, 4: Randbereich
- 5: erstes Reibelement
- 6: Anpressdruck/Anpresskraft
- 7: Längsbewegung/Vorschubrichtung
- 8: Wärmequelle/Reibelement
- 9: Glättungselement
- 10: Fügenaht
- 11: Zusatzwerkstoff/Draht
- 12: Mittelebene
- 13: Rotationsachse
- 14: Drehachse
- 15: Tisch

## Patentansprüche

1. Verfahren zum Fügen zweier im Wesentlichen blechartiger Werkstücke (1, 2), **dadurch gekennzeichnet, dass** die zu fügenden Randbereiche (3, 4) der Werkstücke (1, 2) mit einem Abstand zueinander positioniert werden, dass in einen Bereich zwischen den Randbereichen vor oder während des Fügevorgangs zumindest ein drahtförmiger Zusatzwerkstoff (11) eingebracht wird und dass die Randbereiche (3, 4) und der Zusatzwerkstoff (11) nachfolgend mittels zumindest eines ersten, eine Relativbewegung zu den Randbereichen (3, 4) und dem Zusatzwerkstoff (11) ausführenden scheibenförmigen oder bolzenförmigen Reibelements (5) auf eine Plastifizierungstemperatur erwärmt und durch Aufdrücken des Reibelements (5) auf die Randbereiche (3, 4) mit einem senkrecht zu einer Mittelebene der Werkstücke (1, 2) wirkenden Anpressdruck (6) beaufschlagt und unter Verformung gefügt werden, wobei das Reibelement (5) nicht zwischen die Randbereiche (3, 4) eingebracht wird.

2. Verfahren nach Anspruch 1, **dadurch gekennzeichnet, dass** die Relativbewegung des ersten Reibelements (5) durch eine Rotation und/oder Drehung und/oder Schwingung und/oder Längsbewegung (7) längs der Randbereiche (3, 4) aufgebracht wird.

3. Verfahren nach Anspruch 1 oder 2, **dadurch gekennzeichnet, dass** zur Erwärmung der zu fügenden Randbereiche (3, 4) auf die Plastifizierungstemperatur vor dem ersten Reibelement (5) ein zusätzliches Reibelement (8) auf die Randbereiche aufgebracht und relativ zu diesen bewegt wird.

4. Verfahren nach einem der Ansprüche 1 bis 3, **dadurch gekennzeichnet, dass** zur Erwärmung der zu fügenden Randbereiche (3, 4) auf die Plastifizierungstemperatur die Randbereiche (3, 4) mittels einer externen Wärmequelle (8) erwärmt werden, insbesondere mittels Widerstandserwärmung, induktiver Erwärmung, Gasflamme, Heißgas, Laser, Lichtbogen, Elektronenstrahl, Plasmastrahl und/oder Schmorkontakt.

5. Verfahren nach einem der Ansprüche 1 bis 4, **dadurch gekennzeichnet, dass** die gefügten Randbereiche (3, 4) im erwärmten Zustand mittels eines Glättungselements (9), welches eine Relativbewegung zu den Randbereichen (3, 4) ausführt, geglättet werden.

6. Verfahren nach einem der Ansprüche 1 bis 5, **dadurch gekennzeichnet, dass** als erstes Reibelement (5) und/oder als zusätzliches Reibelement und/oder als Glättungselement (9) ein stabförmiges Element, bevorzugt mit einer angefasten oder mit einem Radius versehenen Stirnfläche, welche gegen die Randbereiche (3, 4) angelegt wird oder ein rollenförmiges oder walzenförmiges Element verwendet wird.

7. Verfahren nach einem der Ansprüche 1 bis 6, **dadurch gekennzeichnet, dass** das erste Reibelement (5) in einer rotierenden oder oszillierenden Relativbewegung zu den Randbereichen (3, 4) und in einer Längsbewegung (7) längs der Randbereiche (3, 4) bewegt wird.

8. Verfahren nach einem der Ansprüche 1 bis 7, **dadurch gekennzeichnet, dass** die Randbereiche (3, 4) geradlinig ausgebildet werden.

9. Verfahren nach einem der Ansprüche 1 bis 8, **dadurch gekennzeichnet, dass** das erste Reibelement (5) auf der Rückseite der Werkstücke (1, 2) durch ein weiteres Reibelement (5) abgestützt wird.

## Claims

1. A method for joining two essentially metal sheet-like workpieces (1, 2), **characterized in that** the peripheral regions (3, 4) to be joined of the workpieces (1, 2) are positioned with a spacing in relation to one another, at least one filler material (11) in the form of a wire is introduced into a region between the peripheral regions before or during the joining operation, and the peripheral regions (3, 4) and the filler material (11) are subsequently heated to a plastifying temperature by means of at least a first disk-like or stud-like frictional element (5), performing a relative movement in relation to the peripheral regions (3, 4) and the filler material (11), and are subjected by the frictional element (5) being pressed onto the peripheral regions (3, 4) to a pressing pressure (6) acting in a direction perpendicular to a central plane of the workpieces (1, 2) and are joined while being deformed, wherein the frictional element (5) is not introduced between the peripheral regions (3, 4).

2. The method as claimed in claim 1, **characterized in that** the relative movement of the first frictional element (5) is applied by a rotation and/or turning and/or oscillation and/or longitudinal movement (7) along the peripheral regions (3, 4).

3. The method as claimed in claim 1 or 2, **characterized in that**, for the heating of the peripheral regions (3, 4) to be joined to the plastifying temperature, an additional frictional element (8) is applied to the peripheral regions and moved in relation to them ahead of the first frictional element (5).

4. The method as claimed in one of claims 1 to 3, **characterized in that**, for the heating of the peripheral regions (3, 4) to be joined to the plastifying temperature, the peripheral regions (3, 4) are heated by means of an external heat source (8), in particular by means of resistance heating, inductive heating, a gas flame, hot gas, laser, arc, electron beam, plasma jet and/or smoldering contact.

5. The method as claimed in one of claims 1 to 4, **characterized in that** the joined peripheral regions (3, 4) are smoothed in the heated state by means of a smoothing element (9), which performs a relative movement in relation to the peripheral regions (3, 4).

6. The method as claimed in one of claims 1 to 5, **characterized in that** an element in the form of a rod, preferably with an end face that is beveled or provided with a radius and placed against the peripheral regions (3, 4), or an element in the form of a roller or roll is used as the first frictional element (5) and/or as the additional frictional element and/or as the smoothing element (9).

7. The method as claimed in one of claims 1 to 6, **characterized in that** the first frictional element (5) is moved in a rotating or oscillating relative movement in relation to the peripheral regions (3, 4) and in a longitudinal movement (7) along the peripheral regions (3, 4).

8. The method as claimed in one of claims 1 to 7, **characterized in that** the peripheral regions (3, 4) are formed as straight.

9. The method as claimed in one of claims 1 to 8, **characterized in that** the first frictional element (5) is supported on the rear side of the workpieces (1, 2) by a further frictional element (5).

## Revendications

1. Procédé d'assemblage de deux pièces à usiner (1, 2) essentiellement de type tôle, **caractérisé en ce que** les zones de bord (3, 4) à assembler des pièces à usiner (1, 2) sont positionnées à une distance l'une de l'autre, **en ce que** dans une zone entre les zones de bord avant ou pendant le processus d'assemblage au moins un matériau supplémentaire (11) en forme de fil métallique est introduit et **en ce que** les zones de bord (3, 4) et le matériau supplémentaire (11) sont chauffés par la suite au moyen d'au moins un premier élément de friction (5) en forme de boulon ou en forme de disque réalisant un mouvement relatif vers les zones de bord (3, 4) et le matériau supplémentaire (11) à une température de plastification et sont alimentés par pressage de l'élément de friction (5) sur les zones de bord (3, 4) avec une pression de contact (6) agissant perpendiculairement à un plan médian des pièces à usiner (1, 2) et sont assemblés par déformation, dans lequel l'élément de friction (5) n'est pas introduit entre les zones de bord (3, 4).

2. Procédé selon la revendication 1, **caractérisé en ce que** le mouvement relatif du premier élément de friction (5) est appliqué par une rotation et/ou torsion et/ou oscillation et/ou un mouvement longitudinal (7) le long des zones de bord (3, 4).

3. Procédé selon la revendication 1 ou 2, **caractérisé en ce que** pour le chauffage des zones de bord (3, 4) à assembler à la température de plastification avant le premier élément de friction (5) un élément de friction (8) supplémentaire est appliqué sur les zones de bord et est déplacé par rapport à celui-ci.

4. Procédé selon l'une quelconque des revendications 1 à 3, **caractérisé en ce que** pour le chauffage des zones de bord à assembler (3, 4) à la température de plastification, les zones de bord (3, 4) sont chauffées au moyen d'une source de chaleur externe (8), en particulier au moyen de chauffage par résistance, chauffage par induction, flamme gazeuse, gaz chaud, laser, arc lumineux, faisceau électronique, faisceau plasma et/ou contact carbonisé.

5. Procédé selon l'une quelconque des revendications 1 à 4, **caractérisé en ce que** les zones de bord assemblées (3, 4) sont lissées à l'état chauffé au moyen d'un élément de lissage (9) qui réalise un mouvement relatif vers les zones de bord (3, 4).

6. Procédé selon l'une quelconque des revendications 1 à 5, **caractérisé en ce que** comme premier élément de friction (5) et/ou comme élément de friction supplémentaire et/ou comme élément de lissage (9) un élément en forme de barre, de préférence avec une surface avant chanfreinée ou pourvue d'un rayon qui est posée contre les zones de bord (3, 4), ou un élément en forme de rouleau ou de cylindre est utilisé.

7. Procédé selon l'une quelconque des revendications 1 à 6, **caractérisé en ce que** le premier élément de friction (5) est déplacé dans un mouvement relatif rotatif ou oscillant vers les zones de bord (3, 4) et dans un mouvement longitudinal (7) le long des zones de bord (3, 4).

8. Procédé selon l'une quelconque des revendications 1 à 7, **caractérisé en ce que** les zones de bord (3, 4) sont réalisées de manière rectiligne.

9. Procédé selon l'une quelconque des revendications 1 à 8, **caractérisé en ce que** le premier élément de friction (5) est en appui sur le côté arrière des pièces à usiner (1, 2) par un autre élément de friction (5).
